# EUROPÄISCHE PATENTSCHRIFT

(11) **EP 0 689 881 B1**
(45) Veröffentlichungstag und Bekanntmachung des Hinweises auf die Patenterteilung: **27.10.1999**
(21) Anmeldenummer: 95106119.1
(22) Anmeldetag: 24.04.1995
(51) Int. Cl.: B05D 1/00, B05D 7/16, B05D 7/14, C09D 175/04, C08G 18/70, C08G 18/73

(54) **Verfahren zur Herstellung von Überzügen**
Process for production of coatings
Procédé de fabrication des couches

(30) Priorität: 05.05.1994 DE 4415778
(43) Veröffentlichungstag der Anmeldung: 03.01.1996
(73) Patentinhaber: BAYER AG, 51368 Leverkusen (DE)
(72) Erfinder: Zwiener, Christian, Dr., D-50735 Köln (DE); Halpaap, Reinhard, Dr., D-51519 Odenthal (DE); Pedain, Josef, Dr., D-51061 Köln (DE); Kiel, Wolfgang, Dr., D-51519 Odenthal (DE)

(56) Entgegenhaltungen:
- EP-A- 0 403 921
- EP-A- 0 531 249
- DE-A- 1 520 139

## Beschreibung

Die vorliegende Erfindung betrifft ein neues Verfahren zur Herstellung von Überzügen auf beliebigen Substraten unter Verwendung eines Beschichtungsmittels, welches als Bindemittel ein Zweikomponenten-System aus einer Polyisocyanatkomponente und einer speziellen, gegenüber Isocyanatgruppen reaktionsfähigen Hydroxylgruppen-freien Reaktivkomponente enthält.

Zweikomponenten-Beschichtungsmittel, die als Bindemittel eine Polyisocyanatkomponente in Kombination mit einer gegenüber Isocyanatgruppen reaktionsfähigen Reaktivkomponente, insbesondere einer Polyhydroxylkomponente, enthalten, sind seit langem bekannt. Sie eignen sich zur Herstellung von hochwertigen Überzügen, die hart, elastisch, abrieb- und lösungsmittelbeständig und vor allem auch witterungsstabil eingestellt werden können.

Bei dem nachstehend näher beschriebenen erfindungsgemäßen Verfahren werden neuartige Zweikomponenten-Beschichtungsmittel eingesetzt, deren Bindemittel aus einem Zweikomponenten-System aus einer Polyisocyanatkomponente und einer gegenüber Isocyanatgruppen reaktionsfähigen Reaktivkomponente besteht, wobei diese Reaktivkomponente sich aus einer Abmischung aus Aldimin- bzw. Ketimingruppen aufweisenden Verbindungen (im folgenden Polyaldimine bzw. Polyketimine genannt) mit bestimmten, nachstehend näher beschriebenen sekundären Polyaminen zusammensetzt.

Bei den sekundären Polyaminen handelt es sich um die sogenannten Polyasparaginsäureester wie sie in der EP-A-0 403 921 beschrieben werden. Diese Amine eignen sich in Kombination mit Lackpolyisocyanaten insbesondere als Bindemittel in lösungsmittelarmen oder -freien Beschichtungsmitteln und ermöglichen eine raschen Aushärtung der Beschichtungen bei niedrigen Tempe-raturen.

Die Verwendung von unter dem Einfluß von Feuchtigkeit gegenüber Polyisocyanaten reaktionsfähigen Polyaldiminen bzw. Polyketiminen zur Herstellung von Polyurethanbeschichtungen (wobei unter dem Begriff "Polyurethan" auch Polyharnstoffe zu verstehen sind) ist bekannt und wird z. B. in der DE-OS 1 520 139 oder DE-OS 3 308 418 beschrieben.

In der EP-A 0 531 249 werden Beschichtungsmittel beschrieben, die als Bindemittel eine Polyisocyanatkomponente in Kombination mit einer gegenüber Isocyanatgruppen reaktionsfähigen bzw. unter dem Einfluß von Feuchtigkeit reaktionsfähigen Reaktivkomponente enthalten. In einer Ausführungsform dieser Anmeldung handelt es sich bei der Reaktivkomponente um Abmischungen von hydroxifunktionellen Harzen mit Polyaldiminen bzw. Polyketiminen und den o.g. Polyasparaginsäureestern.

Die Verwendung von Kombinationen aus Polyasparaginsäureestern und Polyaldiminen bzw. Polyketiminen als Reaktivkomponente wird in der EP-A 0 403 921 nicht erwähnt, während gemäß EP-A 0 531 249 diese Kombination ausschließlich unter Mitverwendung von Hydroxigruppen aufweisenden Harzen in Erwägung gezogen wird. Die Reaktivkomponente für die Polyisocyanatkomponente setzt sich aus drei völlig verschiedenen Einzelkomponenten zusammen, was bei der Formulierung eines Lackes zu erhöhtem Aufwand führt und außerdem das Mischungsverhältnis zwischen Polyaldiminen bzw. Polyketiminen und Polyasparaginsäureestern einschränkt. Da es außerdem bisher noch nicht möglich ist, hydroxifunktionelle Verbindungen herzustellen, die ähnlich niedrige Viskositäten wie Polyaldimine bzw. Polyketimine oder Polyasparaginsäureester aufweisen und trotzdem gleichzeitig den bei der Aushärtung mit niedermolekularen hochfunktionellen Polyisocyanaten unerläßlichen Harzcharakter zeigen, müssen bei der Verwendung von derartigen ternären Reaktivkomponenten beträchtliche Mengen an organischen Lösungsmitteln mitverwendet werden, was die Herstellung von Beschichtungsmitteln mit einem hohen Festkörpergehalt unmöglich macht.

Wie jetzt überraschend gefunden wurde, kann auf die Mitverwendung von Hydroxylgruppen aufweisenden Verbindungen in derartigen Lacksystemen völlig verzichtet werden, so daß Beschichtungsmittel resultieren, die einen hohen Festkörpergehalt aufweisen und nach schneller Antrocknung gute Beständigkeitseigenschaften gegen z. B. Verkratzen und Lösungsmittel zeigen.

Gegenstand der Erfindung ist ein Verfahren zur Herstellung von Überzügen durch Beschichtung beliebiger Substrate mit einem Beschichtungsmittel, welches als Bindemittel ein Zweikomponenten-System aus
a) einer Polyisocyanatkomponente und
b) einer gegenüber Polyisocyanaten reaktionsfähigen Reaktivkomponente,
   enthält, dadurch gekennzeichnet, daß die Bindemittelkomponente b) aus einem Hydroxylgruppen-freien Gemisch aus
b1) 5 bis 95 Gew.-Teilen an Verbindungen der allgemeinen Formel (I) 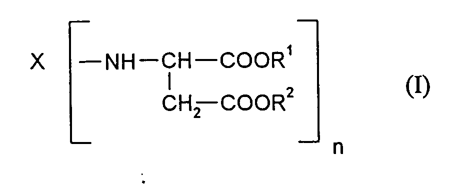 wobei
   - X: für einen n-wertigen, gegenüber Isocyanatgruppen inerten Rest steht, wie er durch Entfernung der primären Aminogruppen aus einem organischen Polyamin des Molekulargewichtsbereich Mₙ 60 bis 6 000 mit n primären (cyclo)aliphatisch gebundenen Aminogruppen erhalten wird,
   - R¹ und R²: für gleiche oder verschiedene Alkyreste mit 1 bis 18 Kohlenstoffatomen stehen,
   - n: für eine ganze Zahl von mindestens 2 steht
   und
b2) 5 bis 95 Gew.-Teilen an Verbindungen des Molekulargewichtsbereichs Mₙ von 112 bis 6 500, die pro Molekül mindestens zwei Struktureinheiten der Formel (II) aufweisen,

   -N=C〈 (II)

   besteht, mit der Maßgabe, daß die Summe der Gewichtsteile der Komponenten b1) und b2) 100 ergibt.

Für das erfindungsgemäße Verfahren kommen als Polyisocyanatkomponenten a) insbesondere die an sich bekannten Lackpolyisocyanate mit (cyclo)aliphatisch gebundenen Isocyanatgruppen in Betracht. Es handelt sich hierbei insbesondere um Derivate von (cyclo)aliphatischen Diisocyanaten des Molekulargewichtsbereichs 168 bis 300 wie beispielsweise Hexamethylendiisocyanat, 2,2,4- und/oder 2,4,4-Trimethylhexamethylendiisocyanat, 2-Methyl-1,5-diisocyanatopentan, 1,4-Diisocyanatocyclohexan, 1-Isocyanato-3,3,5-trimethyl-5-isocyanatomethyl-cyclohexan (IPDI) und/oder von 1-Isocyanato-1-methyl-3(4)-isocyanatomethyl-cyclohexan.

Bei den "Derivaten" dieser Ausgangsdiisocyante handelt es sich um die an sich bekannten Biuretgruppen, Isocyanuratgruppen, Isocyanurat- und Uretdiongruppen, Isocyanurat- und Allophanatgruppen oder Urethangruppen aufweisenden Lackpolyisocyanate auf Basis dieser Diisocyanate. Auch die entsprechenden Derivate von aromatischen Diisocyanaten wie beispielsweise von 2,4- und/oder 2,6-Diisocyanatotoluol sind im Prinzip geeignet, jedoch weniger bevorzugt. Bei den genannten Urethangruppen aufweisenden Derivaten, d.h. den Urethangruppen aufweisenden Polyisocyanaten handelt es sich insbesondere um solche auf Basis von niedermolekularen Polyhydroxylverbindungen des Molekulargewichtsbereichs 62 bis 299 wie beispielsweise Ethylenglykol, Propylenglykol und/oder Trimethylolpropan.

Bei den besonders bevorzugt als Komponente a) geeigneten Lackpolyisocyanaten handelt es sich um Derivate der genannten Art auf Basis von Hexamethylendiisocyanat mit einem NCO-Gehalt von 16 bis 24 Gew.-% und einer Viskosität bei 23°C von max. 5 000, vorzugsweise max. 3 000 mPa.s.

Bei der Komponente b1) handelt es sich um Verbindungen der Formel (I) 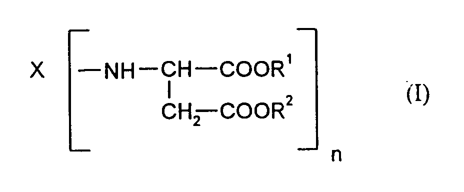 für welche X, R¹, R² und n die bereits vorstehend Genannte Bedeutung haben.

Besonders bevorzugt werden solche Verbindungen der Formel (I) (nachstehend auch als Polyasparaginsäureester bezeichnet) verwendet, für welche n für 2 steht. Besonders bevorzugt sind jene, für welche X für einen zweiwertigen Kohlenwasserstoffrest steht, wie er durch Entfernung der Aminogruppen aus 1-Amino-3,3,5-trimethyl-5-aminomethylcyclohexan, 4,4'-Diaminodicyclohexylmethan, 3,3'-Dimethyl-4,4'-diaminodicyclohexylmethan, Hexahydro-2,4- und/oder 2,6-diaminotoluol, den isomeren C-Monomethyl-diaminodicyclohexylmethanen oder aus 3(4)-Aminomethyl-1-methylcyclohexylamin erhalten wird.

Zu den bevorzugten Ausgangskomponenten b1) gehören im übrigen solche der genannten allgemeinen Formel (I), für welche R¹ und R² für eine Methyl-, Ethyl-, n-Butyl- oder 2-Ethylhexyl-gruppe stehen.

Die Herstellung der Ausgangsverbindungen b1) erfolgt in an sich bekannter Weise durch Umsetzung der entsprechenden primären Polyamine der Formel

X(-NH₂)ₙ

mit Malein- oder Fumarsäureestern der allgemeinen Formel

R¹OOC-CH=CH-COOR²

Geeignete Polyamine sind beispielsweise solche des Molekulargewichtsbereichs Mₙ 60 bis 6 000, vorzugsweise 88 bis 2 000 und insbesondere 88 bis 238 wie Ethylendiamin, 1,2-Diaminopropan, 1,4-Diaminobutan, 1,6-Diaminohexan, 2-Methyl-1,5-diaminopentan, 2,5-Diamino-2,5-dimethylhexan, 2,2,4- und/oder 2,4,4-Trimethyl-1,6-diaminohexan, 1,11-Diaminoundecan, 1,12-Diaminododecan, 1-Amino-3,3,5-trimethyl-5-aminomethylcyclohexan, Hexahydro-2,4- und/oder 2,6-diaminotoluol, andere alkylsubstituierte Cyclohexandiamine, wie z. B. Isopropyl-2,4- und/oder 2,6-diaminocyclohexan, 2,4'- und/oder 4,4'-Diaminodicyclohexylmethan, 3,3'-Dimethyl-4,4'-diaminodicyclohexylmethan, die isomeren, eine Methylgruppe als Kernsubstituenten aufweisenden Diaminodicyclohexylmethane (= C-Monomethyl-diaminodicyclohexylmethane), 3(4)-Aminomethyl-1-methylcyclohexylamin oder auch, weniger bevorzugt, Polyetherpolyamine mit 2 oder 3 aliphatisch gebundenen primären Aminogruppen des Molekulargewichtsbereichs Mₙ 148 bis 6000, wie sie beispielsweise unter der Bezeichnung ®Jeffamin von der Firma Texaco vertrieben werden.

Zur Herstellung der Ausgangskomponenten b1) geeignete Malein- oder Fumarsäureester sind beispielsweise Maleinsäuredimethylester, -diethylester, - di-n- oder -isopropylester, -di-n-butyl-ester, -di-2-ethylhexylester oder die entsprechenden Fumarsäureester.

Die Herstellung der "Polyasparaginsäureester" b1) aus den genannten Ausgangsmaterialien erfolgt beispielsweise innerhalb des Temperaturbereichs von 0 bis 100°C unter Verwendung von solchen Mengenverhältnissen, daß auf jede primäre Aminogruppe mindestens eine und vorzugsweise eine olefinische Doppelbindung entfällt, wobei im Anschluß an die Umsetzung, gegebenenfalls im Überschuß eingesetzte Ausgangsmaterialien destillativ abgetrennt werden können. Die Umsetzung kann in Substanz oder auch in Gegenwart von geeigneten Lösungsmitteln wie beispielsweise Methanol, Ethanol, Propanol, Ethyl- oder Butylacetat oder Gemische derartiger Lösungsmittel erfolgen.

Bei der Komponente b2) handelt es sich um Verbindungen, die pro Molekül mindestens zwei Struktureinheiten der Formel (II)

-N=C〈 (II)

aufweisen. Diese Verbindungen, die im Rahmen der Erfindung als Polyaldimine bzw. Polyketimine bezeichnet werden, weisen ein Molekulargewicht Mₙ von 112 bis 6500, vorzugsweise 140 bis 2500 und insbesondere 140 bis 458 auf. Das Molekulargewicht kann, falls es sich nicht als Summe der Atomgewichte der einzelnen Elemente ohnehin leicht ermitteln läßt, beispielsweise aus der Funktionalität und dem Gehalt an funktionellen Gruppen (beispielsweise ermittelbar durch Bestimmung der nach Hydrolyse vorliegenden primären Aminogruppen) errechnet oder auch, bei höhermolekularen Verbindungen, gelpermeationschromatographisch unter Verwendung von Polystyrol als Standard ermittelt werden.

Zu den bevorzugten Polyaldiminen bzw. Polyketiminen gehören Verbindungen der allgemeinen Strukturformel (III) 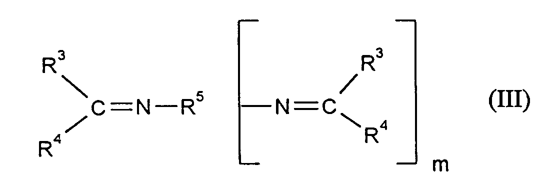 wobei
- R³ und R⁴: für gleiche oder verschiedene Reste stehen und für Wasserstoff oder inerte organische Reste wie z. B. Kohlenwasserstoffreste mit bis zu 8 Kohlenstoffatomen, insbesondere Alkylreste mit 1 bis 8 Kohlenstoffatomen stehen, wobei die Reste R³ und R⁴ auch zusammen mit dem Kohlenstoffatom einen 5- oder 6-gliedrigen cycloaliphatischen Ring bilden können mit der Maßgabe, daß die Reste R³ und R⁴ nicht gleichzeitig für Wasserstoff stehen,
- R⁵: für einen (m + 1)-wertigen Rest steht, wie er durch Entfernung der primären Aminogruppen aus einem entsprechenden, gegebenenfalls Sauerstoff-und/oder Stickstoffatome enthaltenden, (cyclo)aliphatisch gebundene Aminogruppen aufweisenden Polyamin des Molekulargewichtsbereichs Mn 88 bis 2.000 erhalten wird und
- m: für 1 bis 3 steht.

Besonders bevorzugt sind Verbindungen der Formel (III), in der alle Reste R³ für Wasserstoff stehen, die Reste R⁴ für Kohlenwasserstoffreste mit bis zu 8 Kohlenstoffatomen stehen und m = 1 ist..

Die zur Herstellung der Polyaldimine bzw. Polyketimine verwendbaren Aldehyde bzw. Ketone entsprechen der Formel (IV) 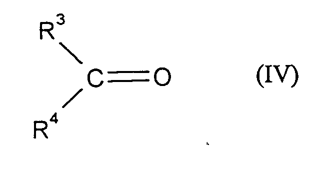 und weisen vorzugsweise ein Molekulargewicht von 58 bis 198 (Ketone) bzw. 44 bis 128 (Aldehyde) auf.

Geeignete Aldehyde sind beispielsweise Acetaldehyd, Propionaldehyd, n-Butyraldehyd, Isobutyraldehyd, Trimethylacetataldehyd, 2,2-Dimethylpropanal, 2-Ethylhexanal, 3-Cyclohexan-1-carboxaldehyd, Hexanal, Heptanal, Octanal, Valeraldehyd, Benzaldehyd, Tetrahydrobenzaldehyd, Hexahydrobenzaldehyd, Propargylaldehyd, p-Toluylaldehyd, Phenylethanal, 2-Methylpentanal, 3-Methylpentanal, 4-Methylpentanal, Sorbinaldehyd.

Besonders bevorzugt sind dabei n-Butyraldehyd, Isobutyraldehyd, Trimethylacetaldehyd, 2-Ethylhexanal und Hexahydrobenzaldehyd.

Geeignete Ketone sind beispielsweise Aceton, Methylethylketon, Methylpropylketon, Methylisopropylketon, Methylbutylketon, Methylisobutylketon, Methyl-tert.-butylketon, Methyl-n-amylketon, Methylisoamyl-keton, Methylheptylketon, Methylundecylketon, Diethylketon, Ethylbutylketon, Ethylamylketon, Diisopropylketon, Diisobutylketon, Cyclohexanon, Cyclopentanon, Methylcyclohexanon, Isophoron, 5-Methyl-3-heptanon, 1-Phenyl-2-propanon, Acetophenon, Methylnonylketon, Dinoylketon, 3,3,5-Trimethylcyclohexanon.

Besonders geeignete Ketone sind:
Cyclopentanon, Cyclohexanon, Methylcyclopentanon, Methylcyclohexanon, 3,3,5-Trimethylcyclopentanon, Cyclobutanon, Methylcyclobutanon, Aceton, Methylethylketon, Methylisobutylketon.

Es können selbstverständlich auch Mischungen verschiedener Ketone bzw. Aldehyde und auch Mischungen von Ketonen mit Aldehyden eingesetzt werden um spezielle Eigenschaften zu erzielen.

Bei den zur Herstellung der Verbindungen b2) zum Einsatz gelangenden Polyaminen handelt es sich um organische Verbindungen, die mindestens zwei und vorzugsweise 2 (m = 1) aliphatisch und/oder cycloaliphatisch gebundene primäre Aminogruppen aufweisen. Die Verwendung von solchen Aminen, die aromatisch gebundene Aminogruppen aufweisen, ist zwar ebenfalls möglich, jedoch weniger bevorzugt. Die Polyamine weisen im allgemeinen ein von 60 bis 6.000, vorzugsweise von 88 bis 2.000 und insbesondere von 88 bis 238 liegendes Molekulargewicht auf. Geeignete Polyamine zur Herstellung der Komponente b2) sind beispielsweise die bereits oben im Zusammenhang mit der Komponente b1) genannten Verbindungen. Selbstverständlich können zur Herstellung der Komponenten b1) bzw. b2) jeweils unterschiedliche Polyamine der beispielhaft genannten Art eingesetzt werden.

Die Herstellung der Polyaldimine bzw. Polyketimine erfolgt nach an sich bekannten Methoden durch Umsetzung der Ausgangskomponenten unter Einhaltung eines stöchiometrischen Verhältnisses von Aminogruppen zu Aldehyd- bzw. Ketogruppen von 1:1 bis 1:1,5. Gegebenenfalls können zur Reaktionsbeschleunigung katalytische Mengen von sauren Substanzen wie z. B. p-Toluolsulfonsäure, Chlorwasserstoff, Schwefelsäure oder Aluminiumchlorid mitverwendet werden.

Die Umsetzung erfolgt im allgemeinen innerhalb des Temperaturbereichs von 20 bis 180°C, wobei die Reaktion gegebenenfalls unter Verwendung eines Schleppmittels (z. B. Toluol, Xylol, Cyclohexan und Octan) zur Entfernung des Reaktionswassers, so lange durchgeführt wird, bis die berechnete Menge an Wasser (1 Mol Wasser pro Mol primäre Aminogruppe) abgespalten ist bzw. bis kein Wasser mehr abgespalten wird. Anschließend werden die Phasen getrennt bzw. das Schleppmittel und gegebenenfalls vorliegende nicht umgesetzte Edukte destillativ abgetrennt.

Die so erhaltenen Produkte können ohne weitere Reinigung als Komponente b2) eingesetzt werden.

In den erfindungsgemäßen zum Einsatz gelangenden Bindemittelkombinationen liegen die Einzelkomponenten b1) und b2) in einem Gewichtsverhältnis von 95:5 bis 5:95, vorzugsweise von 80:20 bis 20:80 entsprechenden Mengen vor. In den Bindemittelkombinationen werden im übrigen die Mengenverhältnisse der Komponenten a), b1) und b2) so bemessen, daß das Äquivalentverhältnis von Isocyanatgruppen zu gegenüber Isocyanatgruppen reaktionsfähigen bzw. potentiell reaktionsfähigen Gruppen bei 0,8:1 bis 2:1, vorzugsweise bei 0,8:1 bis 1,2:1 liegt.

Die Herstellung der erfindungsgemäß einzusetzenden Bindemittel geschieht durch Abmischung der Einzelkomponenten entweder lösungsmittelfrei oder in Anwesenheit der aus der Technologie der Polyurethanbeschichtungen üblichen Lösungsmittel.

Brauchbare Lösungsmittel sind beispielsweise Ethylacetat, Butylacetat, Methoxypropylacetat, Methylisobutylketon, Xylol, N-Methylpyrrolidon, Benzin, Chlorbenzole, ®Solvesso oder Gemische derartiger Lösungsmittel.

Im allgemeinen beträgt in den beim erfindungsgemäßen Verfahren einzusetzenden Beschichtungsmitteln das Gewichtsverhältnis der Gesamtmenge der Bindemittelkomponenten a) und b) zu Lösungsmittel 40:60 bis 100:0, vorzugsweise 60:40 bis 90:10.

In den beim erfindungsgemäßen Verfahren einzusetzenden Beschichtungsmitteln können auch andere, in der Beschichtungstechnologie übliche Hilfs- und Zusatzmittel enthalten sein. Hierzu gehören insbesondere Pigmente, Füllstoffe, Verlaufshilfsmittel, Katalysatoren, Antiabsetzmittel u.dgl.

Die Eigenschaften der beim erfindungsgemäßen Verfahren erhaltenen Überzüge können insbesondere durch geeignete Wahl von Art und Mengenverhältnissen der Ausgangskomponenten a), b1) und b2) eingestellt werden.

Zur Durchführung des erfindungsgemäßen Verfahrens werden die erfindungsgemäß zu verwendenden Beschichtungsmittel nach an sich bekannten Methoden, beispielsweise durch Spritzen, Streichen, Tauchen, Fluten oder mit Hilfe von Walzen oder Rakeln auf beliebige Substrate ein- oder mehrschichtig aufgetragen. Das erfindungsgemäße Verfahren eignet sich zur Herstellung von Überzügen auf beliebigen Substraten, wie z. B. Metallen, Kunststoffen, Holz oder Glas. Besonders gut geeignet ist das erfindungsgemäße Verfahren zur Herstellung von Überzügen auf Stahlblechen, wie sie beispielsweise bei der Herstellung von Fahrzeugkarosserien, Maschinen, Verkleidungsblechen, Fässern oder Containern Verwendung finden. Die beim erfindungsgemäßen Verfahren zu beschichtenden Substrate können vor der Durchführung des erfindungsgemäßen Verfahrens mit geeigneten Grundierungen versehen sein.

Die Trocknung der dem erfindungsgemäßen Verfahren entsprechenden Überzüge kann in einem weiten Temperaturintervall erfolgen, das von ca. 0 bis 160 °C reicht.

Der mit dem erfindungsgemäßen Verfahren erreichbare Oberflächenschutz wird in den nachfolgenden Beispielen demonstriert. In den nachfolgenden Beispielen beziehen sich alle Prozentangaben auf das Gewicht.

### Beispiele

In den nachfolgenden Beispielen werden folgende Ausgangsmaterialien eingesetzt.

### Polyisocyanate a)

### Polyisocyanat I

Handelsübliches, Isocyanuratgruppen aufweisendes Lackpolyisocyanat, erhalten durch Trimerisierung von Hexamethylendiisocyanat, 90 %ige Lösung in Butylacetat/Solventnaphtha 100 (1:1), NCO-Gehalt der Lösung: 19, 4 %, Viskosität der Lösung: ca. 700 mPas (23 °C).

### Polyisocyanat II

Allophanat- und Isocyanuratgruppen aufweisendes Lackpolyisocyanat auf Basis Hexamethylendiisocyanat und n-Butanol (gemäß EP-A 0 496 208). NCO-Gehalt: 20,0 %, Viskosität: ca. 1.000 mPas (23 °C).

### Polyasparaginsäureester b1)

### Polyasparaginsäureester I

Handelsüblicher Polyasparaginsäureester, erhalten durch Addition von 1 Mol 3,3'-Dimethyl-4,4'-diaminodicyclohexylmethan an 2 Mol Maleinsäurediethylester, 90 %ige Lösung in Butylacetat. Äquivalentgewicht der Lösung: ca. 325 g/NH, Viskosität der Lösung: ca. 130 mPas (23 °C).

### Polyasparaginsäureester II

Polyasparaginsäureester aus 1 Mol 4,4'-Diaminodicyclohexylmethan und 2 Mol Maleinsäurediethylester (gemäß EP-A 0 403 921). Äquivalentgewicht: ca. 280 g/NH, Viskosität: ca. 1.500 mPas (23 °C).

### Polyasparaginsäureester III

Polyasparaginsäureester aus 1 Mol eines Gemisches aus Hexahydro-2,4- und 2,6-diaminotoluol (Gew.-Verh. 65:35) und 2 Mol Maleinsäurediethylester. Äquivalentgewicht: ca. 265 g/NH. Viskosität ca: 350 mPas (23 °C).

### Polyaldimine/Polyketimine b2)

### Polyaldimin I

Aldimin aus 1 Mol 1-Amino-3,3,5-trimethyl-5-aminomethylcyclohexan (IPDA) und 2 Mol iso-Butyraldehyd. Viskosität ca. 25 mPas (23 °C). Äquivalentgewicht: 139 g.

### Polyaldimin II

Aldimin aus 1 Mol eines Gemisches aus Hexahydro-2,4- und 2,6-diaminotoluol (Gew.-Verh.: 65:35) und 2 Mol iso-Butyraldehyd. Viskosität: ca. 30 mPas (23 °C) Äquivalentgewicht ca. 120 g.

### Polyaldimin III

Aldimin aus 1 Mol 4,4'-Diaminodicyclohexylmethan und 2 Mol iso-Butyraldehyd. Viskosität ca. 60 mPas (23 °C). Äquivalentgewicht: ca. 159 g.

### Polyaldimin IV

Aldimin aus 1 Mol 1-Amino-3,3,5-trimethyl-5-aminomethylcyclohexan (IPDA) und 2 Mol 2-Ethylhexanal. Viskosität ca. 120 mPas (23 °C). Äquivalentgewicht: ca. 200 g.

### Polyketimin I

Handelsübliches Ketimin aus 1 Mol 1-Amino-3,3,5-trimethyl-5-aminomethylcyclohexan (IPDA) und 2 Mol Methyl-iso-butylketon. Viskosität ca. 80 mPas (23 °C). Äquivalentgewicht: 167 g.

Die in Tabelle 1 beschriebenen Lacke wurden mit einer Rakel auf vorher entfettete Glasplatten appliziert und den Angaben in der nachstehenden Tabelle entsprechend getrocknet. Die Mengenangaben beziehen sich auf Gewichtsteile.

**Tabelle**

| Beispiel Nr. | 1 | 2 | 3 | 4 | 5 | 6 |
|---|---|---|---|---|---|---|
| Polyisocyanat a) | I 138,3 | II135,0 | I 161,3 | I 161,9 | I 130,1 | I 130,1 |
| Polyasparaginsäureester b1) | I 22,2 | II 20,0 | I 22,2 | II 20,0 | II 50,0 | II 50,0 |
| Polyaldimin b2) | I 80,0 | I 80,0 | II 80,0 | II 80,0 | II 50,0 | II 50,0 |
| Polyketimin b2) | | | | | | |
| Äquivalentverhältnis¹ | 1,0 | 1,0 | 1,0 | 1,0 | 1,0 | 1,0 |
| Lösungsmittel² | 40,1 | BuAC 58,8 | 43,0 | 45,2 | 41,3 | 41,3 |
| Festkörpergehalt (Gew.-%) | 80 | 80 | 80 | 80 | 80 | 80 |
| Trocknung | 60'/60°C | 60'/60°C | RT | RT | RT | 30'/120°C |
| Grifftrocknung | nach Trocknung | nach Trocknung | 2,5 h | 2,0 h | 0,75 h | nach Trocknung |

| Lösungsmittelbeständigkeit³ | | | | | | |
|---|---|---|---|---|---|---|
| Methoxipropylacetat | 2 | 0 | 1 | 2 | 2 | 0 |
| Toluol | 2 | 0 | 1 | 2 | 2 | 0 |
| Essigsäureethylester | 2 | 0 | 2 | 3 | 3 | 0 |
| Aceton | 4 | 1 | 3 | 3 | 3 | 3 |
| Bleistifthärte | 3H | 2H | H | H | H | 2H |
| Schichtdicke (µm) | 50 | 50 | 50 | 50 | 50 | 60 |

| Beispiel Nr. | 7 | 8 | 9 | 10 | 11 | 12 |
|---|---|---|---|---|---|---|
| Polyisocyanat a) | I 127,0 | I 113,7 | I 118,3 | I 87,6 | I 121,8 | I 94,0 |
| Polyasparaginsäureester b1) | III20,0 | III50,0 | II 22,2 | II 80,0 | III20,0 | II50,0 |
| Polyaldimin b2) | III80,0 | III50,0 | | | | IV50,0 |
| Polyketimin b2) | | | I 80,0 | I 20,0 | I 80,0 | |
| Äquivalentverhältnis¹ | 1,0 | 1,0 | 1,0 | 1,0 | 1,0 | 1,0 |
| Lösungsmittel² | 40,9 | 39,2 | 37,6 | 36,0 | 43,4 | 36,7 |
| Festkörpergehalt (Gew.-%) | 80 | 80 | 80 | 80 | 80 | 80 |
| Trocknung | 60'/60°C | 60'/60°C | 60'/60°C | RT | 30'/120°C | 60'/60°C |
| Grifftrockuung | nach Trocknung | nach Trocknung | nach Trocknung | 0,5 h | nach Trocknung | nach Trocknung |

| Lösungsmittelbeständigkeit³ | | | | | | |
|---|---|---|---|---|---|---|
| Methoxipropylacetat | 0 | 0 | 0 | 0 | 0 | 0 |
| Toluol | 0 | 0 | 0 | 0 | 0 | 0 |
| Essigsäureethylester | 0 | 0 | 0 | 0 | 2 | 0 |
| Aceton | 3 | 3 | 0 | 1 | 3 | 4 |
| Bleistifthärte | 2H | 2H | 2H | 2H | 2H | 2H |
| Schichtdicke (µm) | 50 | 50 | 50 | 50 | 50 | 50 |

| | | | | | | |
|---|---|---|---|---|---|---|
| 1) Äquivalentverhältnis von Isocyanatgruppen zu der Summe an freien und potentiell gegenüber Isocyanatgruppen reaktionsfähigen Gruppen; | | | | | | |
| 2) Wenn nicht anders angegeben, wurde jeweils das Lösungsmittel verwendet, daß auch in den Polyisocyanaten enthalten ist; | | | | | | |
| 3) Der Test besteht in einer einminütigen Einwirkung eines lösungsmittelgetränkten Wattebauschs auf die Lackoberfläche (0 = Film unverändert, 5 = Film zerstört). | | | | | | |

## Patentansprüche

1. Verfahren zur Herstellung von Überzügen durch Beschichtung beliebiger Substrate mit einem Beschichtungsmittel, welches als Bindemittel ein Zweikomponenten-System aus
a) einer Polyisocyanatkomponente und
b) einer gegenüber Polyisocyanaten reaktionsfähigen Reaktivkomponente,
enthält, dadurch gekennzeichnet, daß die Bindemittelkomponente b) aus einem Hydroxylgruppen-freien Gemisch aus
b1) 5 bis 95 Gew.-Teilen an Verbindungen der allgemeinen Formel (I) 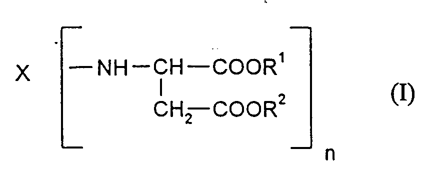 wobei
X für einen n-wertigen, gegenüber Isocyanatgruppen inerten Rest steht, wie er durch Entfernung der primären Aminogruppen aus einem organischen Polyamin des Molekulargewichtsbereich Mₙ 60 bis 6 000 mit n primären (cyclo)aliphatisch gebundenen Aminogruppen erhalten wird,
R¹ und R² für gleiche oder verschiedene Alkylreste mit 1 bis 18 Kohlenstoffatomen stehen,
n für eine ganze Zahl von mindestens 2 steht
und
b2) 5 bis 95 Gew.-Teilen an Verbindungen des Molekulargewichtsbereichs Mₙ von 112 bis 6 500, die pro Molekül mindestens zwei Struktureinheiten der Formel (II) aufweisen,
-N=C〈 (II)
besteht, mit der Maßgabe, daß die Summe der Gewichtsteile der Komponenten b1) und b2) 100 ergibt.

2. Verfahren gemäß Anspruch 1, dadurch gekennzeichnet, daß man als Komponente b1) Verbindungen der allgemeinen Formel (I) verwendet, für welche R¹ und R² für eine Methyl-, Ethyl-, n-Butyl- oder 2-Ethylhexylgruppe stehen und n für 2 steht.

3. Verfahren gemäß Anspruch 1 und 2, dadurch gekennzeichnet, daß man als Komponente b1) Verbindungen der allgemeinen Formel (I) verwendet, für welche X für den Rest steht, wie er durch Entfernung der Aminogruppen aus 1-Amino-3,3,5-trimethyl-5-aminomethyl-cyclohexan, 4,4'-Diaminodicyclohexylmethan, 3,3'-Dimethyl-4,4'-diaminodicyclohexylmethan, Hexahydro-2,4- und/oder 2,6-diaminotoluol, den isomeren C-Monomethyl-diaminodicyclohexylmethanen oder aus 3(4)-Aminomethyl-1-methyl-cyclohexylamin erhalten wird.

4. Verfahren gemäß Anspruch 1 bis 3, dadurch gekennzeichnet, daß man als Komponente b2) Verbindungen der allgemeinen Formel (III) des Molekulargewichtsbereichs Mₙ 112 bis 6500 verwendet. 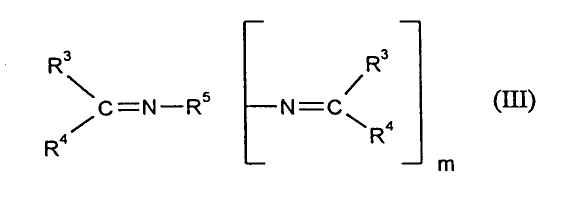 wobei
R³ und R⁴ für gleiche oder verschiedene Reste stehen und Wasserstoff oder Kohlenwasserstoffreste mit bis zu 8 Kohlenstoffatomen bedeuten, wobei die Reste R³ und R⁴ auch zusammen mit dem Kohlenstoffatom einen cycloaliphatischen 5- oder 6-gliedrigen Ring bilden können, mit der Maßgabe, daß die Reste R³ und R⁴ nicht gleichzeitig für Wasserstoff stehen,
R⁵ für einen (m + 1)-wertigen Rest steht, wie er durch Entfernung der primären Aminogruppen aus einem organischen Polyamin des Molekulargewichtsbereichs Mₙ 88 bis 2 000 mit m + 1 (cyclo)aliphatisch gebundenen primären Aminogruppen erhalten wird
und
m für eine ganze Zahl von 1 bis 3 steht.

5. Verfahren gemäß Anspruch 1 bis 4, dadurch gekennzeichnet, daß als Komponente b2) solche der allgemeinen Formel (III) verwendet werden, für welche alle Reste R³ für Wasserstoff stehen und die Reste R⁴ für Kohlenwasserstoffreste mit bis zu 8 Kohlenstoffatomen stehen.

6. Verfahren gemäß Anspruch 1 bis 5, dadurch gekennzeichnet, daß man als Komponente b2) solche Verbindungen der Formel (III) verwendet, für welche R⁵ für einen Rest steht, wie er durch Entfernung der primären Aminogruppen aus einem Polyamin des Molekulargewichtsbereichs von 88 bis 238 erhalten wird und m für 1 steht.

7. Verfahren gemäß Anspruch 1 bis 6, dadurch gekennzeichnet, daß man als Komponente b2) Verbindungen der allgemeinen Formel (III) verwendet, für welche R⁵ für den Rest steht, wie er durch Entfernung der Aminogruppen aus 1-Amino-3,3,5-trimethyl-5-aminomethyl-cyclohexan, 4,4'-Diaminodicyclohexylmethan, 3,3'-Dimethyl-4,4'-diamino-dicyclohexylmethan, Hexahydro-2,4- und/oder 2,6-diaminotoluol oder den isomeren C-Monomethyl-diaminodicyclohexylmethanen oder aus 3(4)-Aminomethyl-1-methylcyclohexylamin erhalten wird.

8. Verfahren gemäß Anspruch 1 bis 7, dadurch gekennzeichnet, daß das Äquivalentverhältnis von Isocyanatgruppen der Komponente a) zu gegenüber Isocyanatgruppen reaktionsfähigen bzw. potentiell reaktionsfähigen Gruppen der Komponente b) bei 0,8:1 bis 2:1 liegt.

## Claims

1. A process for the preparation of coatings by coating any substrates with a coating agent which contains as binder a two-component system of
a) a polyisocyanate component and
b) a reactive component capable of reacting with polyisocyanates,
characterised in that the binder component b) comprises a hydroxyl group-free mixture of
b1) 5 to 95 parts by wt. of compounds having the general formula (I) 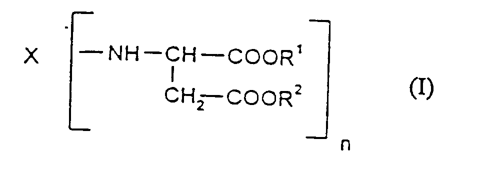 where
X stands for an n-valent radical which is inert towards isocyanate groups, as obtained by removal of the primary amino groups from an organic polyamine of the molecular weight range Mₙ 60 to 6000 with n primary (cyclo)aliphatically bound amino groups,
R¹ and R² stand for the same or different alkyl radicals with 1 to 18 carbon atoms,
n stands for an integer of at least 2,
and
b2) 5 to 95 parts by wt. of compounds of the molecular weight range Mₙ 112 to 6500 having per molecule at least two structural units corresponding to formula (II),
-N=C〈 (II)
provided that the sum of the parts by weight of components b1) and b2) is 100.

2. A process according to claim 1, characterised in that compounds used as component b1) have the general formula (I), for which R¹ and R² stand for a methyl, ethyl, n-butyl or 2-ethylhexyl group and n stands for 2.

3. A process according to claim 1 and 2, characterised in that compounds used as component b1) have the general formula (I), for which X stands for the radical as obtained by removal of the amino groups from 1-amino-3,3,5-trimethyl-5-aminomethylcyclohexane, 4,4'-diaminodicyclohexylmethane, 3,3'-dimethyl-4-4'-diaminodicyclohexylmethane, hexahydro-2,4- and/or 2,6-diaminotoluene, the isomers of C-monomethyldiaminodicyclohexylmethane or from 3(4)-aminomethyl-1-methylcyclohexylamine.

4. A process according to claim 1 to 3, characterised in that compounds used as component b2) have the general formula (III) of the molecular weight range Mₙ 112 to 6500, 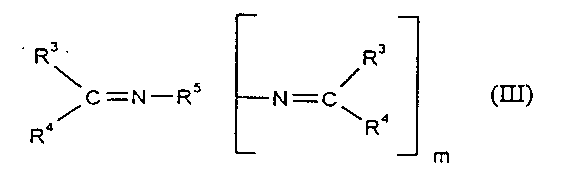 where
R³ and R⁴ stand for the same or different radicals and mean hydrogen or hydrocarbon radicals with up to 8 carbon atoms, where the radicals R³ and R⁴, also together with the carbon atom, may form a cycloaliphatic 5- or 6-membered ring, provided that the radicals R³ and R⁴ do not stand simultaneously for hydrogen,
R⁵ stands for an (m + 1)-valent radical, as obtained by removal of the primary amino groups from an organic polyamine of the molecular weight range Mₙ 88 to 2000, with m + 1 (cyclo)aliphatically bound primary amino groups,
and
m stands for an integer from 1 to 3.

5. A process according to claim 1 to 4, characterised in that those components used as component b2) have the general formula (III) for which all the radicals R³ stand for hydrogen and the radicals R⁴ stand for hydrocarbon radicals with up to 8 carbon atoms.

6. A process according to claim 1 to 5, characterised in that those compounds used as component b2) have the formula (III) for which R⁵ stands for a radical as obtained by removal of the primary amino groups from a polyamine of the molecular weight range 88 to 238 and m stands for 1.

7. A process according to claim 1 to 6, characterised in that compounds used as component b2) have the general formula (III) for which R⁵ stands for the radical as obtained by removal of the amino groups from 1-amino-3,3,5-trimethyl-5-aminomethylcyclohexane, 4,4'-diaminodicyclohexylmethane, 3,3'-dimethyl-4,4'-diaminodicyclohexylmethane, hexahydro-2,4- and/or 2,6-diaminotoluene or the isomers of C-monomethyldiaminodicyclo-hexylmethane or from 3(4)-aminomethyl-1-methylcyclohexylamine.

8. A process according to claim 1 to 7, characterised in that the equivalent ratio of isocyanate groups of component a) to groups of component b) which are capable or potentially capable of reacting with isocyanate groups is 0.8:1 to 2:1.

## Revendications

1. Procédé pour la préparation de revêtements par enduction de n'importe quels substrats avec un agent d'enduction qui contient, à titre de liant, un système à deux composants constitué par
a) un composant de polyisocyanate et
b) un composant réactif apte à réagir vis-à-vis de polyisocyanates,
caractérisé en ce que le composant de liant b) est constitué d'un mélange exempt de groupes hydroxyle, constitué par
b1) à raison de 5 à 95 parties en poids, des composés répondant à la formule générale (I) 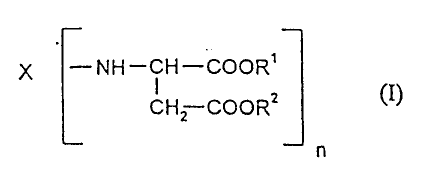 dans laquelle
X représente un radical à valence n inerte vis-à-vis de groupes isocyanate, tel qu'on l'obtient par élimination des groupes amino primaires d'une polyamine organique du domaine de poids moléculaire Mₙ de 60 à 6000 contenant n groupes amino primaires liés à des radicaux (cyclo)aliphatiques,
R¹ et R² représentent des radicaux alkyle identiques ou différents contenant de 1 à 18 atomes de carbone,
n représente un nombre entier au moins égal à 2, et
b2) à raison de 5 à 95 parties en poids, des composés du domaine de poids moléculaire Mₙ de 112 à 6500 qui présentent, par molécule, au moins deux unités de structure répondant à la formule (II)
-N=C〈 (II)
avec cette mesure que la somme des parties en poids des composants b1) et b2) donne 100.

2. Procédé selon la revendication 1, caractérisé en ce qu'on utilise, à titre de composant b1), des composés répondant à la formule générale (I), pour lesquels R¹ et R² représentent un groupe méthyle, un groupe éthyle, un groupe n-butyle ou un groupe 2-éthylhexyle, et n est égal à 2.

3. Procédé selon les revendications 1 et 2, caractérisé en ce qu'on utilise, à titre de composant b1), des composés répondant à la formule générale (I), pour lesquels X représente le radical tel qu'on l'obtient par élimination des groupes amino du 1-amino-3,3,5-triméthyl-5-aminométhylcyclohexane, du 4,4'-diaminodicyclohexylméthane, du 3,3'-diméthyl-4,4'-diaminodicyclohexylméthane, de l'hexahydro-2,4- et/ou 2,6-diaminotoluène, des C-monométhyldiaminodicyclohexylméthanes isomères ou de la 3(4)-aminométhyl-1-méthylcyclohexylamine.

4. Procédé selon les revendications 1 à 3, caractérisé en ce qu'on utilise, à titre de composant b2), des composés répondant à la formule générale (III) du domaine de poids moléculaire Mₙ de 112 à 6500 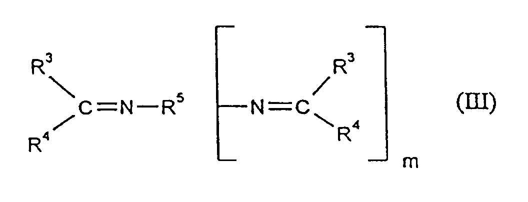 dans laquelle
R³ et R⁴ représentent des radicaux identiques ou différents et représentent un atome d'hydrogène ou des radicaux d'hydrocarbures contenant jusqu'à 8 atomes de carbone, les radicaux R³ et R⁴ pouvant également former de manière conjointe avec l'atome de carbone, un noyau cycloaliphatique penta- ou hexagonal, avec cette mesure que les radicaux R³ et R⁴ ne représentent pas simultanément un atome d'hydrogène,
R⁵ représente un radical à valence (m + 1) tel qu'on l'obtient par élimination des groupes amino primaires d'une polyamine organique du domaine de poids moléculaire Mₙ de 88 à 2000 contenant m + 1 groupes amino primaires liés à des radicaux (cyclo)aliphatiques
et
m représente un nombre entier de 1 à 3.

5. Procédé selon les revendications 1 à 4, caractérisé en ce qu'on utilise, à titre de composant b2), ceux répondant à la formule générale (III), pour lesquels tous les radicaux R³ représentent un atome d'hydrogène et les radicaux R⁴ représentent des radicaux d'hydrocarbures contenant jusqu'à 8 atomes de carbone.

6. Procédé selon les revendications 1 à 5, caractérisé en ce qu'on utilise, à titre de composant b2), des composés répondant à la formule (III) pour lesquels R⁵ représente un radical tel qu'on l'obtient par élimination des groupes amino primaires d'une polyamine du domaine de poids moléculaire de 88 à 238 et m est égal à 1.

7. Procédé selon les revendications 1 à 6, caractérisé en ce qu'on utilise, à titre de composant b2), des composés répondant à la formule générale (III), pour lesquels R⁵ représente le radical tel qu'on l'obtient par élimination des groupes amino du 1-amino-3,3,5-triméthyl-5-aminométhyl-cyclohexane, du 4,4'-diaminodicyclohexylméthane, du 3,3'-diméthyl-4,4'-diaminodicyclohexylméthane, de l'hexahydro2,4- et/ou 2,6-diaminotoluène ou des C-monométhyldiaminodicyclohexylméthanes isomères ou encore de la 3(4)-aminométhyl-1-méthylcyclohexylamine.

8. Procédé selon les revendications 1 à 7, caractérisé en ce que le rapport d'équivalents des groupes isocyanate du composant a) aux groupes du composant b) aptes à réagir, respectivement manifestant une aptitude potentielle à réagir vis-à-vis de groupes isocyanate, s'élève de 0,8:1 à 2:1.
